# EUROPEAN PATENT SPECIFICATION

(11) **EP 1 544 409 B1**
(45) Date of publication and mention of the grant of the patent: **07.06.2006**
(21) Application number: 03795218.1
(22) Date of filing: 11.08.2003
(51) Int. Cl.: F01B 31/26, F01B 23/10, F01B 3/02, H02K 5/20, H02K 9/00

(54) **GENERATOR MOTOR DEVICE**
GENERATORMOTORVORRICHTUNG
DISPOSITIF DE MOTEUR-GENERATEUR

(30) Priority: 20.08.2002 JP 2002239543
(43) Date of publication of application: 22.06.2005
(73) Proprietor: HONDA GIKEN KOGYO KABUSHIKI KAISHA, Minato-ku, Tokyo 107-8556 (JP)
(72) Inventor: FUKUTOMI, Koji, c/o K. K. Honda Gijutsu Kenkyusho, Wako-shi, Saitama 351-0193 (JP); MAKINO, Hiroyuki, K. K. Honda Gijutsu Kenkyusho, Wako-shi, Saitama 351-0193 (JP); MAEDA, Susumu, K. K. Honda Gijutsu Kenkyusho, Wako-shi, Saitama 351-0193 (JP)
(74) Representative: Herzog, Markus
(86) International application number: PCT/JP2003/010226
(87) International publication number: WO 2004/025083

(56) References cited:
- WO-A-02/50481
- JP-A- 1 168 518
- JP-A- 7 231 611
- JP-A- 56 165 701
- JP-A- 61 152 953
- JP-U- 60 134 835
- US-A- 3 606 594
- US-A- 4 881 372
- US-A- 5 320 501
- US-A- 5 467 613

## Description

### FIELD OF THE INVENTION

The present invention relates to a motor/generator system in which a motor/generator is connected to an output shaft of a displacement type expander that converts adiabatic expansion of high temperature, high pressure steam into mechanical work.

### BACKGROUND ART

Japanese Patent Application Laid-open No. 5-98902 discloses an arrangement in which a casing of a displacement type expander of a Rankine cycle system is integrated with a casing of a motor driven by an output shaft of the expander so as to have a structure that is hermetically sealed to the atmosphere, thus preventing leakage of ammonia or Freon, which are working media, from the casing of the expander or the casing of the generator to the atmosphere. The motor is of a so-called can type, the outer periphery of a rotor being covered by a can forming a part of the casing of the motor so as to isolate the rotor from a stator, thus preventing the working medium from leaking past the stator, preventing corrosion of a stator coil due to the working medium, and carrying out cooling of the stator coil with the atmosphere.

Furthermore, Japanese Patent Application Laid-open No. 52-36242 discloses an arrangement in which an internal space of a casing of a non-displacement type expander of a Rankine cycle system employing Freon, etc. as the working medium is separated by a partition from an internal space of a casing of a reduction gear and a generator driven by an output shaft of the expander, and the internal pressure of the casing of the reduction gear and the generator is set lower than the internal pressure of the casing of the expander, thus preventing the working medium from dissolving in an oil for lubricating the reduction gear and the generator, and reducing the rotational resistance of the rotor of the generator.

With regard to a generator driven by being connected to an output shaft of an expander of a Rankine cycle system, a stator coil of the generator generates heat and has a high temperature, and it is therefore necessary to cool it by some means.

The arrangement disclosed in Japanese Patent Application Laid-open No. 5-98902 carries out cooling by employing a can type generator and putting the stator coil in direct contact with the atmosphere, but it is difficult for this alone to achieve a sufficient cooling effect.

In the arrangement disclosed in Japanese Patent Application Laid-open No. 52-36242, since there is slight leakage of the working medium from the casing of the expander, which is on the high pressure side, to the casing of the reduction gear and the generator, which is on the low pressure side, it would be advantageous if the leaked working medium could be used for cooling the generator. However, unlike working medium discharged from a displacement type expander, the working medium discharged from the non-displacement type expander has high temperature and high pressure, and cannot realistically be expected to have an effect in cooling the generator.

### DISCLOSURE OF INVENTION

The present invention has been achieved under the above-mentioned circumstances, and it is an object thereof to cool effectively a motor/generator connected to a displacement type expander as well as improve the efficiency by minimizing escape of heat from the expander.

In order to accomplish this object, in accordance with a first aspect of the present invention, there is proposed a motor/generator system in which a motor/generator is connected to an output shaft of a displacement type expander that converts adiabatic expansion of high temperature, high pressure steam into mechanical work, characterized in that an expander casing housing the expander, which is lubricated with oil, and a motor/generator casing housing the motor/generator are joined so as to be hermetically sealed to the outside air, and an internal space of the expander casing, where steam that has leaked from an expansion chamber is present, is made to communicate with an internal space of the motor/generator casing via a through hole.

In accordance with this arrangement, since the expander casing and the motor/generator casing are joined so as to be hermetically sealed to the outside air, it is possible to prevent the steam from leaking out of the expander casing and the motor/generator casing, and also prevent outside air from contaminating the steam or the oil within the expander casing. Furthermore, since the internal space of the expander casing and the internal space of the motor/generator casing are made to communicate with each other via the through hole, not only is it possible to cool the motor/generator, which has a high temperature as a result of functioning as a generator or a motor, with low temperature steam that has leaked out of a working chamber of the expander to the interior of the expander casing and flowed into the interior of the motor/generator casing via the through hole, but it is also possible to minimize the escape of heat from the expander casing and thus improve the efficiency of the expander as a result of the high temperature motor/generator casing and the low temperature expander casing being joined. In particular, since the expander is of a displacement type, the steam that has leaked out of the expansion chamber has relatively low temperature and pressure, thereby enabling the motor/generator to be cooled effectively.

Furthermore, in accordance with a second aspect of the present invention, in addition to the first aspect, there is proposed the motor/generator system wherein the through hole provides communication between upper parts of the internal spaces of the expander casing and the motor/generator casing.

In accordance with this arrangement, since the upper parts of the internal spaces of the expander casing and the motor/generator casing are made to communicate with each other via the through hole, it is possible to introduce steam alone into the motor/generator casing while preventing the oil within the expander casing from entering the motor/generator casing.

Moreover, in accordance with a third aspect of the present invention, in addition to the first aspect, there is proposed the motor/generator system wherein a liquid return passage is provided in lower parts of the expander casing and the motor/generator casing, the liquid return passage returning water and oil that have accumulated within the motor/generator casing to the expander casing.

In accordance with this arrangement, since the liquid return passage is provided in the lower parts of the expander casing and the motor/generator casing, it is possible to return the water and oil that have accumulated within the motor/generator casing to the expander casing, thereby preventing any degradation in durability of the motor/generator.

Furthermore, in accordance with a fourth aspect of the present invention, in addition to the first aspect, there is proposed the motor/generator system wherein the motor/generator casing is detachably joined to the expander casing so as to cover an output shaft support provided on the expander casing.

In accordance with this arrangement, since the motor casing is detachably joined to the expander casing, the ease of maintenance of the expander and the motor/generator is improved, and since the motor/generator casing covers the output shaft support provided on the expander casing, it is possible to efficiently transmit heat of the motor/generator to the expander.

Moreover, in accordance with a fifth aspect of the present invention, in addition to the first aspect, there is proposed the motor/generator system wherein the motor/generator includes a rotor fixed to a shaft end of the output shaft, and a bearing for cantilever support of the shaft end of the output shaft on the expander casing is housed in a depression of the rotor formed by supporting a permanent magnet on an outer peripheral face of the rotor.

In accordance with this arrangement, since it is possible for the rotor of the motor/generator fixed to the shaft end of the output shaft of the expander to have a depression as a result of the permanent magnet being supported on the surface of the rotor, and the bearing for cantilever support of the shaft end of the output shaft on the expander casing is housed within the depression, it is unnecessary to provide on the motor/generator casing a bearing for supporting the output shaft, and as a result it is possible to decrease the number of components and reduce the axial dimensions of the motor/generator. Furthermore, because of the elimination of the bearing, it is unnecessary to store oil within the expander casing, thereby preventing any degradation in durability of the motor/generator due to the oil.

A casing 11 and a casing 111 of an embodiment correspond to the expander casing and the motor/generator casing of the present invention, a front cover 15, a pump housing 102, and a pump cover 104 of the embodiment correspond to the output shaft support of the present invention, and a ball bearing 105 of the embodiment corresponds to the bearing of the present invention.

### BRIEF DESCRIPTION OF DRAWINGS

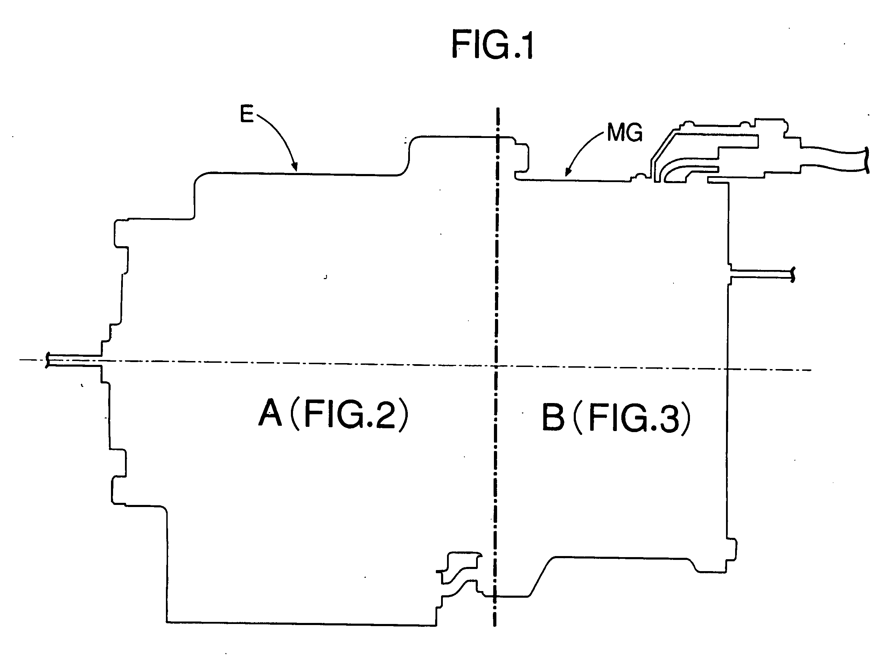

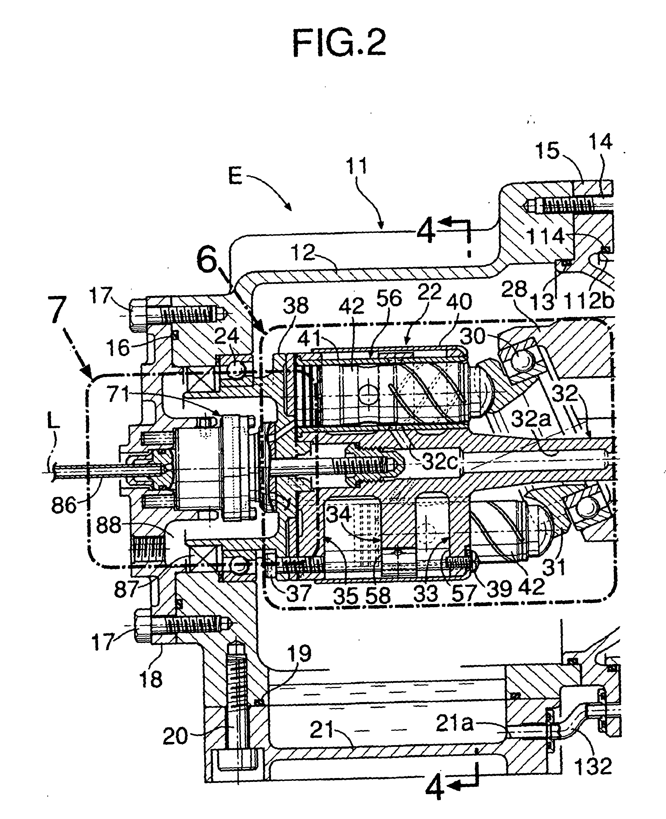

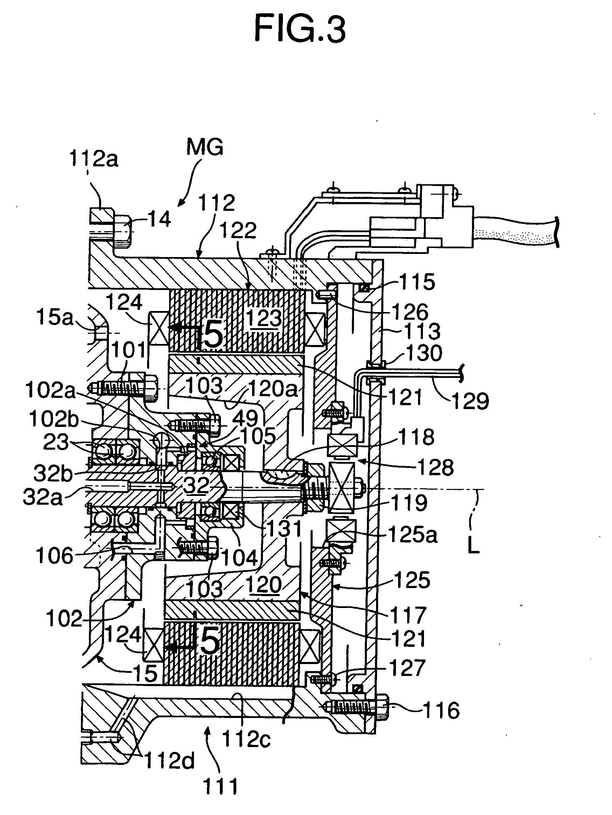

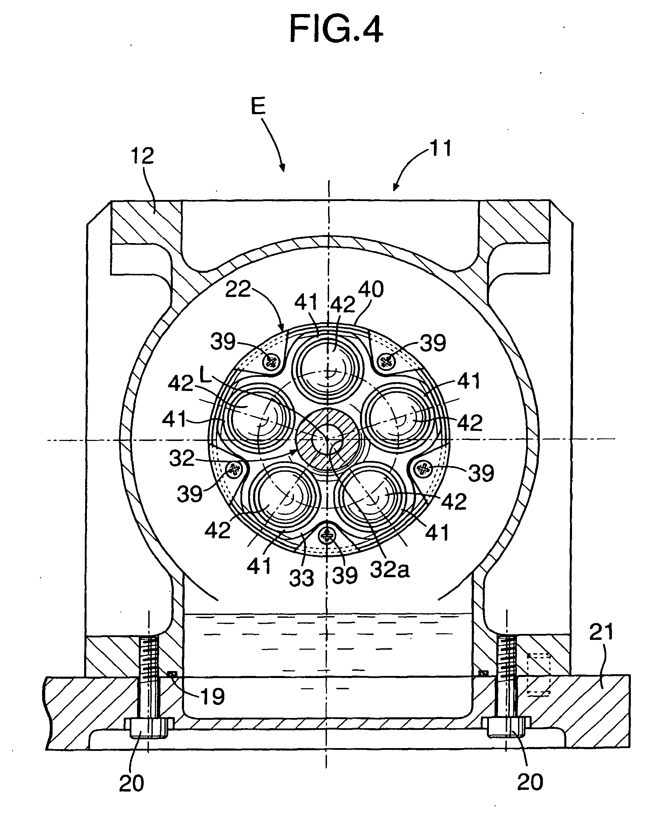

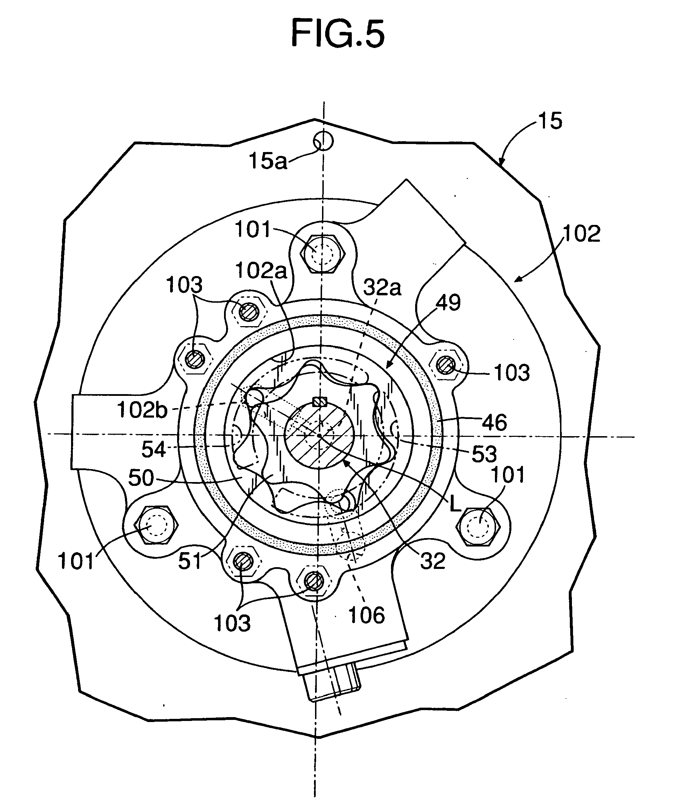

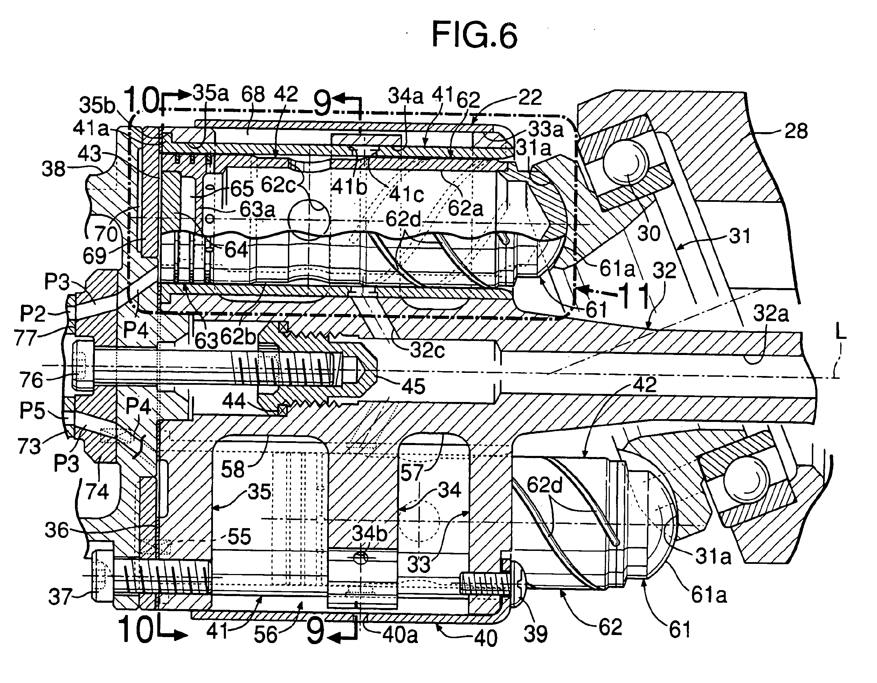

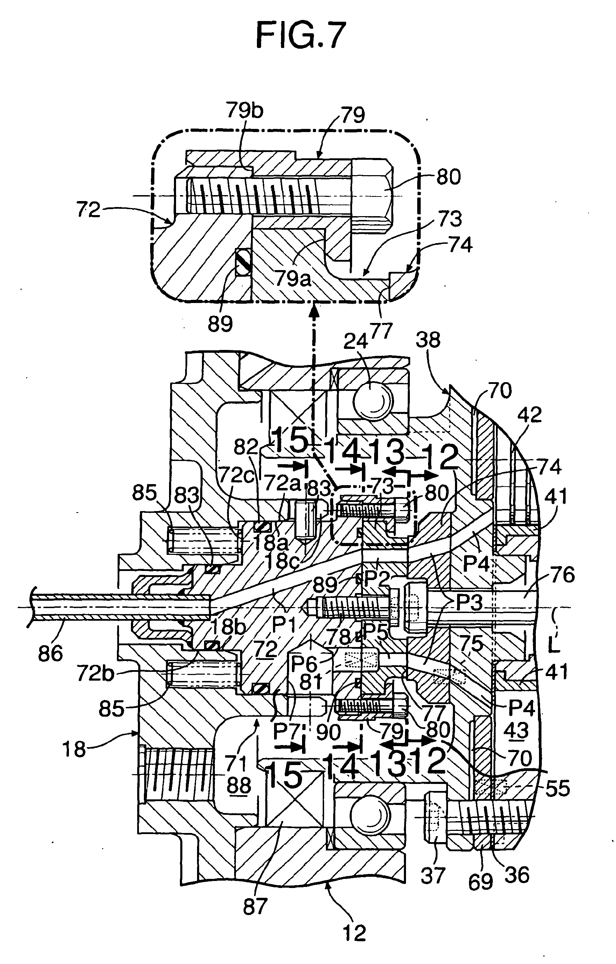

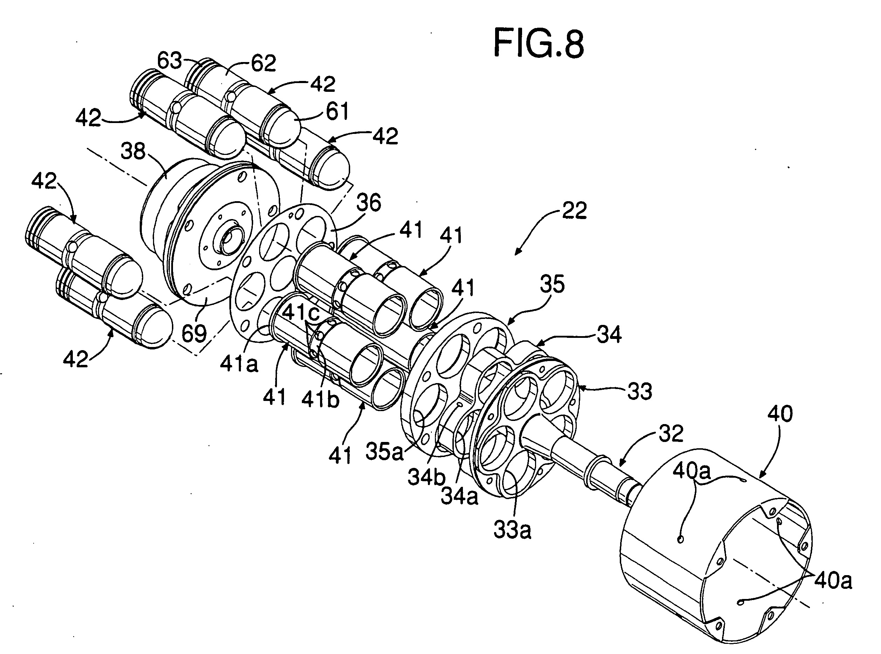

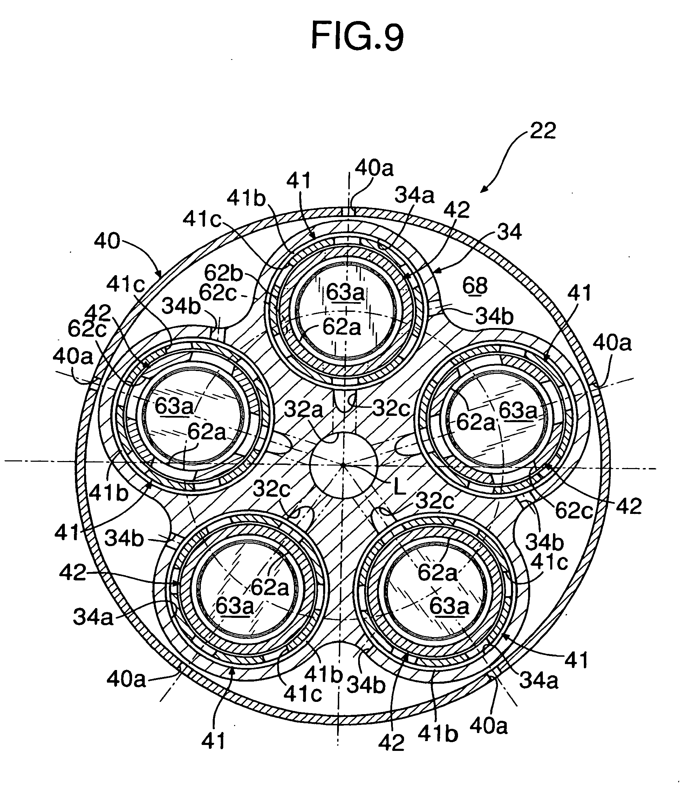

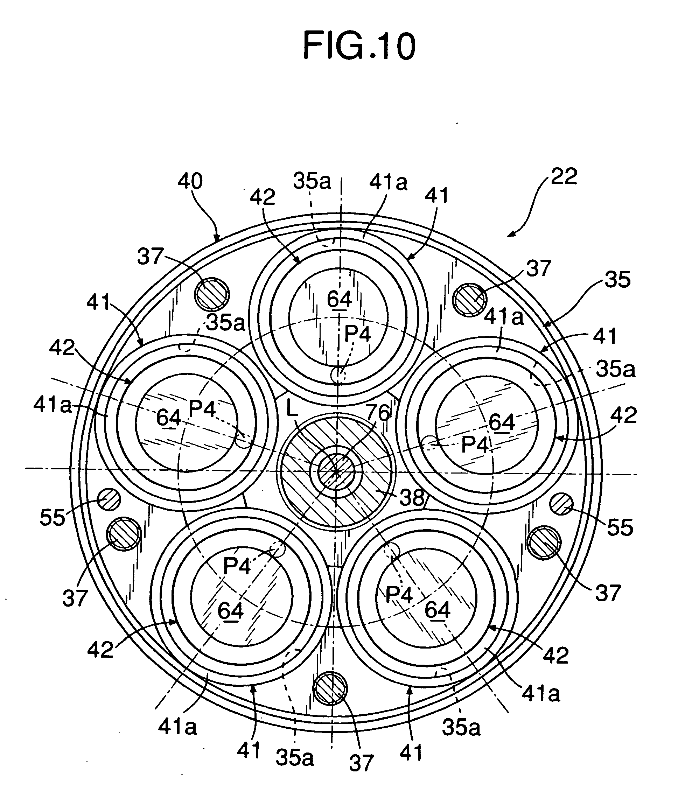

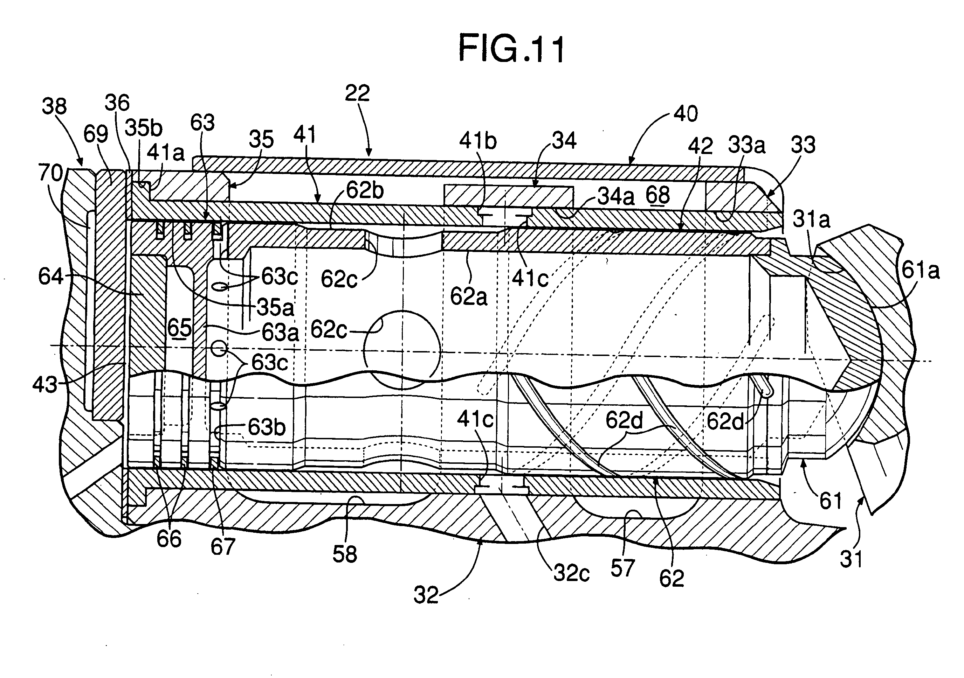

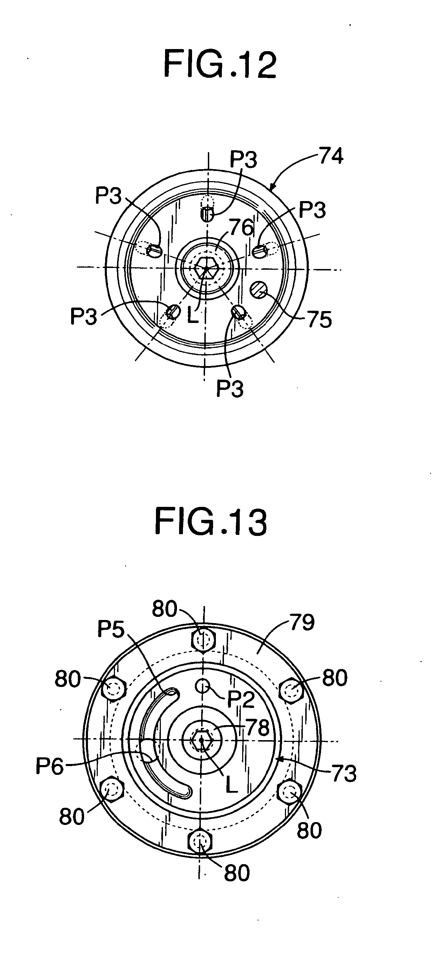

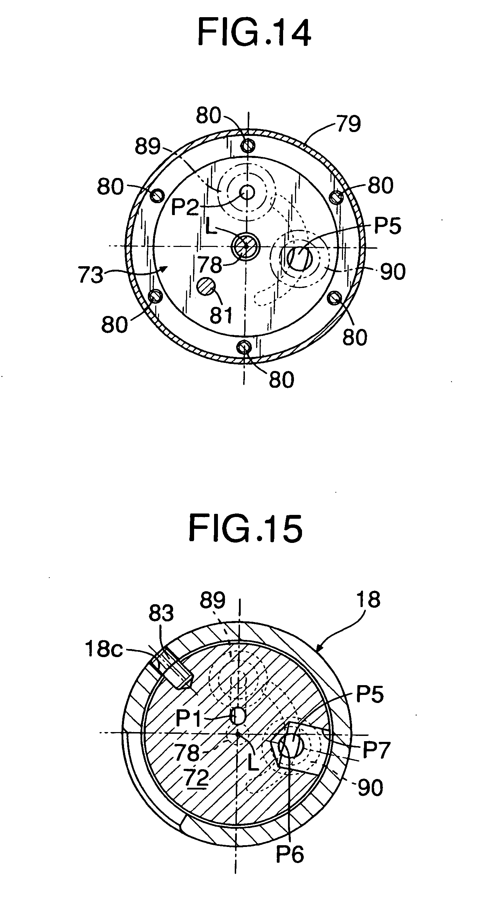

FIG. 1 to FIG. 15 show one embodiment of the present invention; FIG. 1 is a view showing the external shape of an expander equipped with a motor/generator, FIG. 2 is an enlarged view of part A of FIG. 1, FIG. 3 is an enlarged view of part B of FIG. 1, FIG. 4 is a sectional view along line 4-4 in FIG. 2, FIG. 5 is a sectional view along line 5-5 in FIG. 3, FIG. 6 is an enlarged view of part 6 in FIG. 2, FIG. 7 is an enlarged view of part 7 in FIG. 2, FIG. 8 is an exploded perspective view of a rotor, FIG. 9 is a sectional view along line 9-9 in FIG. 6, FIG. 10 is a sectional view along 10-10 in FIG. 6, FIG. 11 is an enlarged view of part 11 in FIG. 6, FIG. 12 is a sectional view along line 12-12 in FIG. 7, FIG. 13 is a sectional view along line 13-13 in FIG. 7, FIG. 14 is a sectional view along line 14-14 in FIG. 7, and FIG. 15 is a sectional view along line 15-15 in FIG. 7.

### BEST MODE FOR CARRYING OUT THE INVENTION

A mode for carrying out the present invention is explained below with reference to an embodiment of the present invention shown in the attached drawings.

FIG. 1 to FIG. 15 show one embodiment of the present invention.

As shown in FIG. 1 to FIG. 11, an expander E of this embodiment is used in, for example, a Rankine cycle system, and outputs mechanical work by adiabatic expansion of high temperature, high pressure steam as a working medium. A casing 11 of the expander E is formed from a casing main body 12, a front cover 15 joined via a seal 13 to a front opening of the casing main body 12 by a plurality of bolts 14, a rear cover 18 joined via a seal 16 to a rear opening of the casing main body 12 by a plurality of bolts 17, an oil pan 21 joined via a seal 19 to a lower opening of the casing main body 12 by a plurality of bolts 20, a pump housing 102 joined to a front face of the front cover 15 by a plurality of bolts 101, and a pump cover 104 joined to a front face of the pump housing 102 by a plurality of bolts 103.

A rotor 22 arranged rotatably around an axis L extending in the fore-and-aft direction in the center of the casing 11 1 has a front part thereof supported by ball bearings 23 provided in the front cover 15 and the pump housing 102 and a ball bearing 105 provided in the pump cover 104 and has a rear part thereof supported by a ball bearing 24 provided in the casing main body 12. A swash plate holder 28 is formed integrally with a rear face of the front cover 15, and a swash plate 31 is rotatably supported by the swash plate holder 28 via an angular ball bearing 30. The axis of the swash plate 31 is inclined relative to the axis L of the rotor 22, and the angle of inclination is fixed.

The rotor 22 includes an output shaft 32, three sleeve support flanges 33, 34, and 35 formed integrally with a rear part of the output shaft 32 via cutouts 57 and 58 having predetermined widths (see FIG. 6 and FIG. 11), a rotor head 38 that is joined by a plurality of bolts 37 to the rear sleeve support flange 35 via a metal gasket 36 and supported by the casing main body 12 via the ball bearing 24, and a heat-insulating cover 40 that is fitted over the three sleeve support flanges 33, 34, and 35 from the front and joined to the front sleeve support flange 33 by a plurality of bolts 39.

Sets of five sleeve support holes 33a, 34a, and 35a are formed in the three sleeve support flanges 33, 34, and 35 respectively at intervals of 72° around the axis L, and five cylinder sleeves 41 are fitted into the sleeve support holes 33a, 34a, and 35a from the rear. A flange 41 a is formed on the rear end of each of the cylinder sleeves 41, and axial positioning is carried out by abutting this flange 41 a against the metal gasket 36 while fitting the flange 41 a into a step 35b formed in the sleeve support holes 35a of the rear sleeve support flange 35 (see FIG. 11). A piston 42 is slidably fitted within each of the cylinder sleeves 41, the front end of the piston 42 abutting against a dimple 31 a formed on the swash plate 31, and a steam expansion chamber 43 is defined between the rear end of the piston 42 and the rotor head 38.

An oil passage 32a is formed so as to extend on the axis L within the output shaft 32, which is integral with the rotor 22, and the front end of the oil passage 32a branches in a radial direction and communicates with an annular channel 32b on the outer periphery of the output shaft 32. An oil passage blocking member 45 is screwed into the inner periphery of the oil passage 32a via a seal 44 at a radially inner position of the middle sleeve support flange 34 of the rotor 22, and a plurality of oil holes 32c extending radially outward from the oil passage 32a in the vicinity of the oil passage blocking member 45 open on the outer peripheral face of the output shaft 32.

A trochoidal oil pump 49 is disposed between a recess 102a formed in a front face of the pump housing 102 and the pump cover 104, which is fixed via a seal 46 to the front face of the pump housing 102 by the bolts 103, and includes an outer rotor 50 that is rotatably fitted in the recess 102a, and an inner rotor 51 that is fixed to the outer periphery of the output shaft 32 and meshes with the outer rotor 50. An internal space of the oil pan 21 communicates with an intake port 53 of the oil pump 49 via an oil passage 106 formed in the pump housing 102, the front cover 15, the casing main body 12, and the oil pan 21, and a discharge port 54 of the oil pump 49 communicates with the annular channel 32b of the output shaft 32 via an oil passage 102b of the pump housing 102.

The piston 42, which is slidably fitted into the cylinder sleeve 41, is formed from an end part 61, a middle part 62, and a top part 63. The end part 61 is a member having a spherical part 61 a that abuts against the dimple 31 a of the swash plate 31, and is joined by welding to the forward end of the middle part 62. The middle part 62 is a cylindrical member having a large volume hollow space 62a; an outer peripheral part of the middle part 62 close to the top part 63 has a small diameter part 62b whose diameter is slightly reduced, a plurality of oil holes 62c are formed so as to run radially through the small diameter part 62b, and a plurality of spiral oil channels 62d are formed in an outer peripheral part that is present forward of the small diameter part 62b. The top part 63 faces the expansion chamber 43 and is formed integrally with the middle part 62, and a heat-insulating space 65 is formed between a dividing wall 63a formed on an inner face of the top part 63 and a cover member 64 fitted into and welded to a rear end face of the top part 63 (see FIG. 11). Two compression rings 66 and one oil ring 67 are mounted on the outer periphery of the top part 63, and an oil ring channel 63b into which the oil ring 67 is fitted communicates with the hollow space 62a of the middle part 62 via a plurality of oil holes 63c.

The end part 61 and the middle part 62 of the piston are made of high-carbon steel, and the top part 63 is made of stainless steel; among these, the end part 61 is subjected to induction hardening, whereas the middle part 62 is subjected to hardening. As a result, high surface pressure resistance can be imparted to the end part 61, which abuts against the swash plate 31 at a high surface pressure, abrasion resistance can be imparted to the middle part 62, which is in sliding contact with the cylinder sleeve 41 under severe lubrication conditions, and heat resistance and corrosion resistance can be imparted to the top part 63, which faces the expansion chamber 43 and is exposed to high temperature and high pressure.

An annular channel 41 b is formed on the outer periphery of a middle part of the cylinder sleeve 41 (see FIG. 8 and FIG. 11), and a plurality of oil holes 41c are formed in the annular channel 41 b. Regardless of where rotationally the cylinder sleeve 41 is mounted, the oil holes 32c formed in the output shaft 32 and oil holes 34b formed in the middle sleeve support flange 34 of the rotor 22 (see FIG. 6 and FIG. 8) communicate with the annular channel 41 b. A space 68 formed between the heat-insulating cover 40 and the front and rear sleeve support flanges 33 and 35 of the rotor 22 communicates with the internal space of the casing 11 via oil holes 40a formed in the heat-insulating cover 40 (see FIG. 6 and FIG. 9).

An annular cover member 69 is welded to the front, or expansion chamber 43 side, of the rotor head 38, which is joined to the rear face of the front sleeve support flange 33 of the rotor 22 by the bolts 37, and an annular heat-insulating space 70 is defined at the back, or rear face, of the cover member 69 (see FIG. 11). The rotor head 38 is positioned rotationally relative to the rear sleeve support flange 35 by a knock pin 55.

The five cylinder sleeves 41 and the five pistons 42 form an axial piston cylinder group 56 of the present invention.

The structure of a rotary valve 71 for the supply and discharge of steam to and from the five expansion chambers 43 of the rotor 22 is now explained with reference to FIG. 7, and FIG. 12 to FIG. 15.

As shown in FIG. 7, the rotary valve 71, which is disposed along the axis L of the rotor 22, includes a valve main body 72, a stationary valve plate 73, and a movable valve plate 74. The movable valve plate 74 is fixed to a rear face of the rotor 22 by a bolt 76 screwed into the oil passage blocking member 45 (see FIG. 6) while being positioned in the rotational direction by a knock pin 75. The bolt 76 also has the function of fixing the rotor head 38 to the output shaft 32.

As is clear from FIG. 7, the stationary valve plate 73, which abuts against the movable valve plate 74 via flat sliding surfaces 77, is fixed to the center of a front face of the valve main body 72 by one bolt 78, and also to an outer peripheral part of the valve main body 72 by an annular fixing ring 79 and a plurality of bolts 80. During this process, a step 79a formed on the inner periphery of the fixing ring 79 is press-fitted around the outer periphery of the stationary valve plate 73, and a step 79b formed on the outer periphery of the fixing ring 79 is fitted around the outer periphery of the valve main body 72, thereby ensuring that the stationary valve plate 73 is coaxial with the valve main body 72. A knock pin 81 is disposed between the valve main body 72 and the stationary valve plate 73, and determines the position of the stationary valve plate 73 in the rotational direction.

When the rotor 22 rotates, the movable valve plate 74 and the stationary valve plate 73 therefore rotate relative to each other on the sliding surfaces 77 in a state in which they are in intimate contact with each other. The stationary valve plate 73 and the movable valve plate 74 are made of a material having excellent durability, such as carbon or a ceramic, and the durability can be further improved by providing or coating the sliding surfaces 77 with a member having heat resistance, lubricating properties, corrosion resistance, and abrasion resistance.

The valve main body 72, which is made of stainless steel, is a stepped cylindrical member having a large diameter part 72a and a small diameter part 72b; outer peripheral faces of the large diameter part 72a and the small diameter part 72b are fitted slidably in the axial L direction into circular cross-section support faces 18a and 18b of the rear cover 18 via seals 82 and 83 respectively, and positioned in the rotational direction by fitting a pin 84 implanted in an outer peripheral face of the valve main body 72 into a cutout 18c formed in the axial L direction in the rear cover 18. A plurality of preload springs 85 are supported in the rear cover 18 so as to surround the axis L, and the valve main body 72, which has a step 72c between the large diameter part 72a and the small diameter part 72b pushed by these preload springs 85, is biased forward so as to put the sliding surfaces 77 of the stationary valve plate 73 and the movable valve plate 74 in intimate contact.

A steam supply pipe 86 connected to a rear face of the valve main body 72 communicates with the sliding surfaces 77 via a first steam passage P1 formed in the interior of the valve main body 72 and a second steam passage P2 formed in the stationary valve plate 73. A steam discharge chamber 88 sealed by a seal 87 is formed between the casing main body 12, the rear cover 18, and the rotor 22, and this steam discharge chamber 88 communicates with the sliding surfaces 77 via sixth and seventh steam passages P6 and P7 formed in the interior of the valve main body 72 and a fifth steam passage P5 formed in the stationary valve plate 73. Provided on surfaces where the valve main body 72 and the stationary valve plate 73 are joined are a seal 89 surrounding a part where the first and second steam passages P1 and P2 are connected to each other and a seal 90 surrounding a part where the fifth and sixth steam passages P5 and P6 are connected to each other.

Five third steam passages P3 disposed at equal intervals so as to surround the axis L run through the movable valve plate 74, and opposite ends of five fourth steam passages P4 formed in the rotor 22 so as to surround the axis L communicate with the third steam passages P3 and the expansion chambers 43. The part of the second steam passage P2 opening on the sliding surface 77 is circular, whereas the part of the fifth steam passage P5 opening on the sliding surface 77 has an arc shape with the axis L as its center.

The structure of the motor/generator MG, which is joined to the expander E, is now explained.

As is clear from FIG. 2 and FIG. 3, a casing 111 of the motor/generator MG, which is a direct current brushless type, is formed from a substantially cylindrical casing main body 112 and a substantially disk-shaped cover plate 113. A flange 112a and an annular projection 112b are formed at the rear end of the casing main body 112, and the annular projection 112b is fitted into the inner peripheral face of the front cover 15 of the casing 11 of the expander E via a seal 114, and coaxially secured to a front face of the front cover 15 by means of the bolts 14, which run through the flange 112a. The cover plate 113 is fitted into the front end of the casing main body 112 via a seal 115 and fixed thereto by means of a plurality of bolts. 116.

A rotor 117 of the motor/generator MG includes a rotor main body 120 fixed to a shaft end of the output shaft 32 by means of a key 118 and a nut 119, and a plurality of permanent magnets 121 fixed to the outer periphery of the rotor main body 120. A stator 122 facing the outer peripheral face of the rotor 117 includes a yoke 123 press-fitted into the inner peripheral face of the casing main body 112 and a plurality of concentrated winding type coils 124 wound around the yoke 123. As the permanent magnets 121, strong magnets such as neodymium (NeFeB) magnets are used, and the corrosion resistance thereof is improved by plating with nickel or chromium or coating with a resin. The stator 122 may be impregnated with a varnish so as to improve the corrosion resistance and the insulation. If the stator 122 is resin-molded, the cooling characteristics can be improved.

The shaft end of the output shaft 32, which supports the rotor 117 of the motor/generator MG, is cantilever-supported by the ball bearing 105 provided on the pump cover 104, and no bearing for supporting the output shaft 32 is provided on the casing 111 of the motor/generator MG. Supporting the permanent magnets 121 on the outer peripheral face of the rotor main body 120 enables a depression 120a to be formed in a rear face of the rotor main body 120, and a front part of the pump housing 102 and the pump cover 104 are housed within the depression 120a.

In this way, the front part of the pump housing 102 and the pump cover 104 are housed in the depression 120a of the rotor main body 120, the output shaft 32 is cantilever-supported by the ball bearing 105, and it is therefore possible to reduce the dimensions in the axis L direction of the motor/generator MG. If a bearing were to be provided on the casing 111 of the motor/generator MG, the dimensions and friction would be increased by amounts corresponding to the bearing, it would be necessary to store oil within the casing 111, and the materials of the motor/generator MG might be degraded by the oil. However, in this embodiment, since there is no need to provide a bearing on the casing 111 of the motor/generator MG, the above-mentioned problems can be solved.

Furthermore, since a direct current brushless type motor/generator MG having high output density is employed, the dimensions can be reduced compared with a case in which a direct current brush type or an induction type is used. Furthermore, since the form of winding of the coils 124 of the stator 122 of the motor/generator MG is the concentrated winding type, in comparison with a case in which a distributed winding type is employed, it is possible to shorten the coil end and reduce the dimensions of the coils 124 and, moreover, since the coil end winding, which makes no contribution to the output, is shortened, the copper loss decreases and the efficiency increases. Furthermore, since the motor/generator MG is of a built-in sealed type, which does not employ a magnet coupling or a can, it is possible to reduce the dimensions while maintaining high efficiency.

An annular rotational sensor holder 125 is fixed to a front part of the casing main body 112 by means of a plurality of bolts 127 while being positioned radially by being fitted into the front part and being positioned in the rotational direction by a knock pin 126. A rotational sensor 128 is provided between an opening 125a formed in the center of the rotational sensor holder 125 and the shaft end of the output shaft 32, which runs through the opening 125a, the rotational sensor 128 detecting rotation of the output shaft 32. A lead 129 of the rotational sensor 128 is guided to the exterior of the cover plate 113 via a hermetic seal 130 having a sealing function.

Since the internal space of the casing 11 of the expander E and the internal space of the casing 111 of the motor/generator MG are isolated from the atmosphere, it is possible to prevent steam within the casing 11 of the expander E and the casing 111 of the motor/generator MG from leaking to the outside, and it is also possible to prevent outside air from contaminating the steam or the oil within the casings 11 and 111.

An outer peripheral part of the output shaft 32 extending from the internal space of the casing 11 of the expander E to the internal space of the casing 111 of the motor/generator MG is sealed with a seal 131 provided on the pump cover 104. Because of this, the internal space of the casing 11 of the expander E and the internal space of the casing 111 of the motor/generator MG are basically isolated from each other, but a through hole 15a formed in an upper part of the front cover 15 of the expander E provides communication between the two internal spaces. Furthermore, a channel 112c and a through hole 112d provided in a lower part of the casing main body 112 of the motor/generator MG and a through hole 21 a provided in a lower part of the oil pan 21 are made to communicate with each other via a liquid return passage 132, which is a pipe.

The operation of the embodiment having the above-mentioned arrangement is now explained.

High temperature, high pressure steam generated by heating water in an evaporator reaches the sliding surfaces 77 of the stationary valve plate 73 with the movable valve plate 74 from the steam supply pipe 86 via the first steam passage P1 formed in the valve main body 72 of the rotary valve 71 and the second steam passage P2 formed in the stationary valve plate 73, which is integral with the valve main body 72. The second steam passage P2 opening on the sliding surface 77 communicates momentarily during a predetermined intake period with the corresponding third steam passage P3 formed in the movable valve plate 74, which rotates integrally with the rotor 22, and the high temperature, high pressure steam is supplied, via the fourth steam passage P4 formed in the rotor 22, from the third steam passage P3 to the expansion chamber 43 within the cylinder sleeve 41.

Even after the communication between the second steam passage P2 and the third steam passage P3 has been blocked due to rotation of the rotor 22, the high temperature, high pressure steam expands within the expansion chamber 43 and causes the piston 42 fitted in the cylinder sleeve 41 to be pushed forward from top dead center toward bottom dead center, and the end part 61 at the front end of the piston 42 pushes against the dimple 31 a of the swash plate 31. As a result, a reaction force that the piston 42 receives from the swash plate 31 gives a rotational torque to the rotor 22. For each one fifth of a revolution of the rotor 22, the high temperature, high pressure steam is supplied into a fresh adjoining expansion chamber 43, thus continuously rotating the rotor 22.

While the piston 42, having reached bottom dead center accompanying rotation of the rotor 22, retreats toward top dead center by being pushed by the swash plate 31, the low temperature, low pressure steam pushed out of the expansion chamber 43 is discharged into the steam discharge chamber 88 via the fourth steam passage P4 of the rotor 22, the third steam passage P3 of the movable valve plate 74, the sliding surfaces 77, the arc-shaped fifth steam passage P5 of the stationary valve plate 73, and the sixth and seventh steam passages P6 and P7 of the valve main body 72, and is supplied therefrom into a condenser.

The oil pump 49 provided on the output shaft 32 operates accompanying rotation of the rotor 22, and oil is taken in from the oil pan 21 via the oil passage 106 and the intake port 53, discharged from the discharge port 54, and supplied to a space between the cylinder sleeve 41 and the small diameter part 62b formed in the middle part 62 of the piston 42 via the oil passage 102b of the pump housing 102, the annular channel 32b of the output shaft 32, the oil passage 32a of the output shaft 32, the oil holes 32c of the output shaft 32, the annular channel 41 b of the cylinder sleeve 41, and the oil holes 41 c of the cylinder sleeve 41. A portion of the oil retained by the small diameter part 62b flows into the spiral oil channels 62d formed in the middle part 62 of the piston 42 and lubricates the surface that slides against the cylinder sleeve 41, and another portion of the oil lubricates surfaces of the compression rings 66 and the oil ring 67 provided at the top part 63 of the piston 42 that slide against the cylinder sleeve 41.

Since water formed in the expansion chamber 43 by condensation of a portion of the supplied high temperature, high pressure steam inevitably enters between the sliding surfaces of the cylinder sleeve 41 and the piston 42 and contaminates the oil, the lubrication conditions of the sliding surfaces are severe, but by supplying a necessary amount of oil directly to the sliding surfaces of the cylinder sleeve 41 and the piston 42 from the oil pump 49 via the interior of the output shaft 32, it is possible to maintain a sufficient oil film, thereby ensuring the lubrication performance and enabling the dimensions of the oil pump 49 to be reduced.

Oil scraped off the surface of the cylinder sleeve 41 that the piston 42 slides against by the oil ring 67 flows from the oil holes 63c formed in the base of the oil ring channel 63b into the hollow space 62a within the piston 42. The hollow space 62a communicates with the interior of the cylinder sleeve 41 via the plurality of oil holes 62c running through the middle part 62 of the piston 42, and the interior of the cylinder sleeve 41 communicates with the annular channel 41 b on the outer periphery of the cylinder sleeve 41 via the plurality of oil holes 41 c. Although the surroundings of the annular channel 41 b are covered by the middle sleeve support flange 34 of the rotor 22, since the oil hole 34b is formed in the sleeve support flange 34, the oil within the hollow space 62a of the piston 42 is urged radially outward due to centrifugal force, discharged to the space 68 within the heat-insulating cover 40 via the oil hole 34b of the sleeve support flange 34, and returned therefrom to the oil pan 21 via the oil holes 40a of the heat-insulating cover 40. During this process, since the oil hole 34b is positioned toward the axis L relative to the radially outer edge of the sleeve support flange 34, the oil that is present radially outside the oil hole 34b is retained in the hollow space 62a of the piston 42 by centrifugal force.

In this way, the oil retained in the hollow space 62a within the piston 42 and the oil retained in the small diameter part 62b on the outer periphery of the piston 42 is supplied from the small diameter part 62b to the top part 63 side during an expansion stroke in which the volume of the expansion chamber 43 increases, and is supplied from the small diameter part 62b to the end part 61 side during a compression stroke in which the volume of the expansion chamber 43 decreases, and it is therefore possible to ensure reliable lubrication over the entire axial region of the piston 42. Furthermore, as a result of the oil flowing within the hollow space 62a of the piston 42, the heat of the top part 63, which is exposed to high temperature, high pressure steam, is transmitted to the end part 61, which has a low temperature, and it is thus possible to avoid the temperature of the piston 42 increasing locally.

When high temperature, high pressure steam is supplied from the fourth steam passage P4 to the expansion chamber 43, since the heat-insulating space 65 is formed between the middle part 62 and the top part 63 of the piston 42, which faces the expansion chamber 43, and the heat-insulating space 70 is formed in the rotor head 38, which faces the expansion chamber 43, it is possible to minimize the escape of heat from the expansion chamber 43 to the piston 42 and the rotor head 38, thereby contributing to an improvement in the performance of the expander E. Furthermore, since the large volume hollow space 62a is formed within the piston 42, not only is it possible to reduce the weight of the piston 42, but it is also possible to reduce the heat capacity of the piston 42, thereby enabling the escape of heat from the expansion chamber 43 to be suppressed yet more effectively.

Since the expansion chamber 43 is sealed by interposing the metal gasket 36 between the rear sleeve support flange 35 and the rotor head 38, in comparison with a case in which the expansion chamber 43 is sealed via a thick annular seal, unnecessary volume around the seal can be reduced, thus ensuring that the expander E has a large volume ratio (expansion ratio) and thereby improving the thermal efficiency, which enables the output to be increased. Moreover, since the cylinder sleeve 41 is formed separately from the rotor 22, the material of the cylinder sleeve 41 can be selected without being restricted by the material of the rotor 22, while taking into consideration the thermal conductivity, heat resistance, strength, abrasion resistance, etc., and, moreover, it is possible to replace only a worn or damaged cylinder sleeve 41, which is economical.

Furthermore, since the outer peripheral face of the cylinder sleeve 41 is exposed through the two cutouts 57 and 58 formed circumferentially in the outer peripheral face of the rotor 22, not only is it possible to reduce the weight of the rotor 22, but it is also possible to reduce the heat capacity of the rotor 22, thereby improving the thermal efficiency and, moreover, the cutouts 57 and 58 function as a heat-insulating space, thus suppressing the escape of heat from the cylinder sleeve 41. Furthermore, since the outer peripheral part of the rotor 22 is covered by the heat-insulating cover 40, it is possible to suppress the escape of heat from the cylinder sleeve 41 yet more effectively.

Since the rotary valve 71 supplies and discharges steam to and from the axial piston cylinder group 56 via the flat sliding surfaces 77 between the stationary valve plate 73 and the movable valve plate 74, it is possible to prevent the leakage of steam effectively. This is because the flat sliding surfaces 77 can easily be machined with high precision, and control of the clearance is easy compared with cylindrical sliding surfaces. Moreover, since a surface pressure is generated on the sliding surfaces 77 of the stationary valve plate 73 and the movable valve plate 74 by applying a preset load to the valve main body 72 by means of the plurality of preload springs 85, it is possible to suppress the leakage of steam past the sliding surfaces 77 yet more effectively.

Furthermore, since the valve main body 72 of the rotary valve 71 is made of stainless steel, which has a large coefficient of thermal expansion, and the stationary valve plate 73 fixed to the valve main body 72 is made of carbon or a ceramic, which has a small coefficient of thermal expansion, there is the possibility that the centering between the two might be displaced due to a difference in the coefficients of thermal expansion, but since the fixing ring 79 is fixed to the valve main body 72 by means of the plurality of bolts 80 in a state in which the step 79a on the inner periphery of the fixing ring 79 is press-fitted over the outer periphery of the stationary valve plate 73 and the step 79b on the outer periphery of the fixing ring 79 is press-fitted over the outer periphery of the valve main body 72, it is possible to carry out precise centering of the stationary valve plate 73 relative to the valve main body 72 by the aligning action of the press-fitting of the fixing ring 79 and prevent the timing of supply and discharge of steam from deviating, thereby preventing deterioration in the performance of the expander E. Moreover, it is possible to make the abutting surfaces of the stationary valve plate 73 and the valve main body 72 come into intimate and uniform contact by virtue of the securing force of the bolts 80, thereby suppressing the leakage of steam past the abutting surfaces.

Moreover, since the rotary valve 71 can be attached to and removed from the casing main body 12 merely by removing the rear cover 18 from the casing main body 12, the ease of maintenance operations such as repair, cleaning, and replacement can be greatly improved. Furthermore, although the rotary valve 71 through which the high temperature, high pressure steam passes reaches a high temperature, since the swash plate 31 and the output shaft 32, where lubrication by oil is required, are disposed on the opposite side of the rotor 22 to the rotary valve 71, degradation of the lubrication performance of the swash plate 31 and the output shaft 32 due to heating of the oil by the heat of the rotating valve 71, which reaches a high temperature, can be prevented. Moreover, the oil also exhibits the function of cooling the rotary valve 71, thus preventing overheating.

As hereinbefore described, when the output shaft 32 of the expander E rotates as a result of adiabatic expansion of the high temperature, high pressure steam, the motor/generator MG connected to the output shaft 32 can be made to function as a generator so as to generate electricity and charge a battery (not illustrated), or by supplying power from the battery the motor/generator MG can be made to function as a motor, thus assisting rotation of the output shaft 32 of the expander E.

When the motor/generator MG functions as a generator or a motor, since the coils 124 thereof generate heat and reach a high temperature, it is necessary to cool the motor/generator MG by some means. In this embodiment, in light of the internal temperature of the casing 111 of the motor/generator MG being higher than the temperature of the steam leaking out of the expansion chambers 43 of the expander E to the interior of the casing 11, the motor/generator MG is cooled with the steam that has leaked. That is, although the internal space of the casing 111 of the expander E and the internal space of the motor/generator MG are isolated from the atmosphere, since the two internal spaces are made to communicate with each other via the through hole 15a (see FIG. 3 and FIG. 5) formed in the front cover 15 of the casing 11 of the expander E, relatively low temperature steam enters the internal space of the casing 111 of the motor/generator MG from the internal space of the casing 11 of the expander E via the through hole 15a, thus cooling the high temperature motor/generator MG. The motor/generator MG is cooled by the surface of the casing 111 thereof being exposed to the outside air, but since the specific heat of the steam supplied from the expander E is greater than the specific heat of air, a sufficient cooling effect from the steam can be expected.

Furthermore, the casing 11 of the expander E is in direct contact with the casing 111 of the motor/generator MG, and since a part of the casing 11 of the motor/generator MG, which has a low temperature, is covered by the casing 111 of the expander E, which has a high temperature and, moreover, since the steam whose temperature has increased after cooling the motor/generator MG is returned to the motor/generator MG via the through hole 15a, the escape of heat from the expander E is suppressed and the expander E is actively heated, thereby contributing to an improvement in the efficiency of the expander E. Furthermore, since the through hole 15a provides communication between the upper parts of the internal spaces of the expander E and the motor/generator MG, it is possible to suppress to a minimum the entrance of condensed water and oil on the expander E side into the motor/generator MG via the through hole 15a, thus suppressing degradation of members of the motor/generator MG by the condensed water or the oil.

In particular, since the casing main body 112 of the motor/generator MG is joined so as to cover the front cover 15, the pump housing 102, and the pump cover 104, which correspond to an output shaft support of the expander E, not only is it possible to suppress the escape of heat from the expander E yet more effectively, but it is also possible to reduce the dimensions in the axis L direction of the expander E and the motor/generator MG by minimizing unnecessary volume within the casing 111 of the motor/generator MG. Furthermore, since the motor/generator MG is of an inner rotor type, in which the outer periphery of the rotor 117 is covered by the stator 122, it is possible to enhance the release of heat from the casing 111 by increasing the contact area between the casing 111 and the stator 122, which reaches a high temperature.

Moreover, since the casing 11 of the expander E is detachably joined to the casing 111 of the motor/generator MG, not only can maintenance of the motor/generator MG and the expander E be easily carried out by separating them, but it is also possible to improve the ease of assembly. Furthermore, since the cover plate 113 and the rotational sensor holder 125 of the motor/generator MG can be separated from the casing 111 in the axis L direction, exchange and maintenance of the rotational sensor 128 or the rotor 117 of the motor/generator MG can be carried out easily.

A very small gap is provided between ends of the coils 124 and the rotational sensor holder 125 for insulation. In this case, providing an insulating sheet in the gap enables the gap to be further decreased, thus further reducing the dimensions in the axis L direction of the motor/generator MG.

Small amounts of oil mist and water droplets are mixed with the steam entering the internal space of the motor/generator MG from the internal space of the expander E, and if they build up as oil or water in the base part of the casing 111 of the motor/generator MG, there is a possibility that members of the motor/generator MG might be degraded and the durability might deteriorate. However, in this embodiment, since the oil and water are returned to the base part of the oil pan 21 via the channel 112c of the casing main body 112, the through hole 112d of the casing main body 112, the liquid return passage 132, and the through hole 21 a of the oil pan 21, degradation of the durability of the motor/generator MG can be prevented.

The permanent magnets 121 of the motor/generator MG employ neodymium magnets, which have the highest coercive force, and the reason that neodymium magnets, which are not highly resistant to heat, can be used is because the motor/generator MG is cooled with steam so as to decrease its temperature. If cooling of the motor/generator MG were not carried out, it would be impossible to employ neodymium magnets, which do not have high heat resistance, and instead it would be necessary to employ samarium cobalt (SmCo) magnets, which have high heat resistance but low coercive force, and it would become difficult to make the motor/generator MG exhibit its full performance.

Although an embodiment of the present invention is explained above, the present invention can be modified in a variety of ways without departing from the spirit and scope thereof.

For example, the expander E is illustrated for a Rankine cycle system in the embodiment, but the expander E of the present invention can be applied to any other purpose.

## Claims

1. A motor/generator system in which a motor/generator (MG) is connected to an output shaft (32) of a displacement type expander (E) that converts adiabatic expansion of high temperature, high pressure steam into mechanical work,
**characterized in that** an expander casing (11) housing the expander (E), which is lubricated with oil, and a motor/generator casing (111) housing the motor/generator (MG) are joined so as to be hermetically sealed to the outside air, and an internal space of the expander casing (11), where steam that has leaked from an expansion chamber (43) is present, is made to communicate with an internal space of the motor/generator casing (111) via a through hole (15a).

2. The motor/generator system according to Claim 1, wherein the through hole (15a) provides communication between upper parts of the internal spaces of the expander casing (11) and the motor/generator casing (111).

3. The motor/generator system according to Claim 1, wherein a liquid return passage (132) is provided in lower parts of the expander casing (11) and the motor/generator casing (111), the liquid return passage (132) returning water and oil that have accumulated within the motor/generator casing (111) to the expander casing (11).

4. The motor/generator system according to Claim 1, wherein the motor/generator casing (111) is detachably joined to the expander casing (11) so as to cover an output shaft support (15, 102, 104) provided on the expander casing (11).

5. The motor/generator system according to Claim 1, wherein the motor/generator (MG) comprises a rotor (117) fixed to a shaft end of the output shaft (32), and a bearing (105) for cantilever support of the shaft end of the output shaft (32) on the expander casing (11) is housed in a depression (120a) of the rotor (117) formed by supporting a permanent magnet (121) on an outer peripheral face of the rotor (117).

## Patentansprüche

1. Motor/Generator-System, bei welchem ein Motor/Generator (MG) mit einer Ausgangswelle (32) eines Expanders (E) vom Verdrängungstyp verbunden ist, der adiabatische Expansion von Hochtemperatur-Hochdruck-Dampf in mechanische Arbeit umwandelt,
**dadurch gekennzeichnet, dass** ein Expandergehäuse (11), welches den ölgeschmierten Expander (E) aufnimmt, und ein Motor/Generator-Gehäuse (111), welches den Motor/Generator (MG) aufnimmt, so miteinander verbunden sind, dass sie zur Außenluft hin hermetisch abgedichtet sind, und dass ein Innenraum des Expandergehäuses (11), in welchem von einer Expansionskammer (43) ausgetretener Dampf vorhanden ist, über ein Durchgangsloch (15a) mit einem Innenraum des Motor/Generator-Gehäuse (111) in Verbindung steht.

2. Motor/Generator-System gemäß Anspruch 1, bei welchem das Durchgangsloch (15a) eine Verbindung zwischen oberen Teilen der Innenräume des Expandergehäuses (11) und des Motor/Generator-Gehäuses (111) vorsieht.

3. Motor/Generator-System gemäß Anspruch 1, bei welchem in unteren Teilen des Expandergehäuses (11) und des Motor/Generator-Gehäuses (111) ein Flüssigkeitsrückführdurchgang (132) vorgesehen ist, wobei der Flüssigkeitsrückführdurchgang (132) im Motor/Generator-Gehäuse (111) angesammeltes Wasser und Öl zum Expandergehäuse (11) zurückführt.

4. Motor/Generator-System gemäß Anspruch 1, bei welchem das Motor/Generator-Gehäuse (111) mit dem Expandergehäuse (11) abnehmbar verbunden ist, um eine Ausgangswellenhalterung (15, 102, 104) abzudecken, die auf dem Expandergehäuse (11) vorgesehen ist.

5. Motor/Generator-System gemäß Anspruch 1, bei welchem der Motor/Generator (MG) einen Rotor (117) umfasst, der an einem Wellenende der Ausgangswelle (32) befestigt ist, und bei welchem ein Lager (105) für einen freitragenden Halt des Wellenendes der Ausgangswelle (32) auf dem Expandergehäuse (11) in einer Eindrückung (120a) des Rotors (117) aufgenommen ist, die durch das Haltern eines Dauermagneten (121) auf einer äußeren Umfangsfläche des Rotors (117) ausgebildet ist.

## Revendications

1. Système de moteur / générateur dans lequel un moteur / générateur (MG) est connecté à un arbre de sortie (32) d'un détendeur de type à déplacement (E) qui convertit une détente adiabatique d'une vapeur sous haute pression à haute température en travail mécanique,
**caractérisé en ce qu'**un carter de détendeur (11) logeant le détendeur (E), qui est lubrifié avec de l'huile, et un carter de moteur / générateur (111) logeant le moteur / générateur (MG) sont connectés de manière hermétiquement étanche à l'air extérieur, et un espace interne du carter de détendeur (11), dans lequel est présente de la vapeur qui a fuit d'une chambre de détente (43), est aménagé de manière à communiquer avec un espace interne du carter de moteur / générateur (111) par l'intermédiaire d'un trou traversant (15a).

2. Système de moteur / générateur selon la revendication 1, dans lequel le trou traversant (15a) fournit une communication entre des parties supérieures des espaces internes du carter de détendeur (11) et du carter de moteur / générateur (111).

3. Système de moteur / générateur selon la revendication 1, dans lequel un passage de retour de liquide (132) est aménagé dans des parties inférieures du carter de détendeur (11) et du carter de moteur / générateur (111), le passage de retour de liquide (132) retournant de l'eau et de l'huile qui se sont accumulées à l'intérieur du carter de moteur / générateur (111) vers le carter de détendeur (11).

4. Système de moteur / générateur selon la revendication 1, dans lequel le carter de moteur / générateur (111) est connecté de manière amovible au carter détendeur (11) de manière à recouvrir un support d'arbre de sortie (15, 102, 104) disposé sur le carter de détendeur (11).

5. Système de moteur / générateur selon la revendication 1, dans lequel le moteur / générateur (MG) comprend un rotor (117) fixé sur une extrémité d'arbre de l'arbre de sortie (32), et un palier (105) destiné à supporter en porte à faux l'extrémité d'arbre de l'arbre de sortie (32) sur le carter de détendeur (11) est logé dans un retrait (120a) du rotor (117) formé en supportant un aimant permanent (121) sur une face périphérique externe du rotor (117).
